# EUROPEAN PATENT SPECIFICATION

(11) **EP 0 450 938 B1**
(45) Date of publication and mention of the grant of the patent: **20.12.1995**
(21) Application number: 91302931.0
(22) Date of filing: 03.04.1991
(51) Int. Cl.: H01M 10/48, G01R 31/36

(54) **Battery having a label comprising a voltmeter**
Batterie mit einem ein Voltmeter enthaltenden Etikett
Pile avec une étiquette comprenant un voltmètre

(30) Priority: 04.04.1990 US 504504
(43) Date of publication of application: 09.10.1991
(73) Proprietor: EASTMAN KODAK COMPANY, Rochester, New York 14650-2201 (US)
(72) Inventor: Cataldi, Richard T., c/o EASTMAN KODAK COMPANY, Rochester, New York 14650-2201 (US); Hein, Patrick D., c/o EASTMAN KODAK COMPANY, Rochester, New York 14650-2201 (US); Leo, John C., c/o EASTMAN KODAK COMPANY, Rochester, New York 14650-2201 (US); Heirigs, Henry J., c/o EASTMAN KODAK COMPANY, Rochester, New York 14650-2201 (US)
(74) Representative: Jones, Alan John

(56) References cited:
- DE-A- 3 738 731
- NL-A- 8 600 282
- US-A- 4 379 816
- US-A- 4 497 881
- US-A- 4 723 656
- US-A- 4 835 476
- IEEE TRANSACTIONS ON POWER APPARATUS AND SYSTEMS. vol. PAS92, no. 1, January
- 1973, NEW YORK US pages 104 - 107; R. PARKER: 'SOLID STATE RMS RECORDING AMMETER'

## Description

This invention relates to batteries having a label which includes a voltmeter.

Batteries are routinely stored prior to and during use. Frequently they are discarded after storage while still having useful electrical power.

Battery testers for indicating battery capacity are known. Such devices are described in US-A-4 737 020; US-A-4 702 564; US-A-4 702 563; US-A-4 835 475; and US-A-4 835 476.

These testers generally include a conductive layer in thermal contact with a temperature sensitive color indicator layer. When the ends of the conductive layer are contacted to battery terminals, electrical current flows, creating heat in the conductive layer. The heat causes a change in the indicator layer.

The usefulness of the above devices are extremely limited. They are also inconvenient to use. The tester must be carried as a separate item. This is aggravated in the case of testers incorporated into a package since the entire package must be carried separately.

In addition, current tester designs do not allow ease of operation on all cells. In most cases, the tester is larger than the battery for which the tester is designed. This makes it difficult to maintain the terminals of the testers in contact with the batteries and achieve reproducible results because such testers are generally flexible.

Also the prior art battery testers cannot be used when the conductive circuits of the testers are in contact with battery housings. This is because the housings act as heat sinks diverting heat generated by the conductive layer away from the tester color indicating layer.

US-A-4 497 881 discloses a battery having a charge indicator incorporated therein. The arrangement utilises the charge producing compound of the battery to produce a color change indicative of the state of charge of the battery. The color change is viewed through a window formed in the battery housing. A comparison chart is provided so that the state of charge of the battery can be determined by comparing the color of the charge producing compound through the window with the chart.

US-A-4 723 656 describes a package for batteries which incorporates a battery tester therein. The tester comprises a resistive element connected between a pair of electrical contacts and a liquid crystal material located in thermal contact with the resistive element. A battery to be tested is positioned between the electrical contacts so as to make contact with the battery terminals. This causes the resistive element to heat up due to the current passing therethrough. The temperature change of the element produces a color change in the liquid crystal material to provide a visual indication of the voltage of the battery.

US-A-4 379 816 describes an indicator for a rechargeable battery in which a temperature sensitive material is attached to the battery and which changes color with increasing temperature. The indicator operates on the principle that the temperature of the battery will increase when it is fully charged and subjected to an overcharge current. Part of the temperature sensitive material is thermally coupled to the battery for sensing an increase in temperature due to an overcharging current, and another part is maintained at ambient temperature and is thermally insulated from the battery. Any change in color of the part of the temperature sensitive material thermally coupled to the battery can be readily perceived by comparing the color of that part of the material with the color of the part which is thermally insulated therefrom.

In accordance with the present invention, there is provided a battery having a label attached thereto, the battery comprising a housing which acts as a heat-sink,
characterized in that the label includes, as an integral part thereof, a voltmeter comprising:
a dielectric layer;
a conductive layer adjacent one of the surfaces of the dielectric layer; and
a temperature sensitive color indicator layer in thermal contact with the conductive layer, the conductive layer having sufficient heat generating capacity to effect a change in the temperature sensitive color indicator layer;
and in that the voltmeter further comprises thermal insulating means on the other surface of the dielectric layer for thermally insulating the conductive layer and the dielectric layer from the housing of the battery to which the label is attached, and one or two apertures in the dielectric layer for forming an electrical switch cooperating with an electrically conductive surface of the battery housing, one or both ends of the conductive layer being in registration with a corresponding aperture thereby forming said switch.

The present invention obviates the disadvantages of the prior art in that the voltmeter can always be carried along with the battery. The difficulty of engaging the terminals of the voltmeter to the terminals of the battery are eliminated by the unique switching means provided by this invention. Thus reproducible measurements are easily attained.

Moreover, the present invention overcomes the heat sink problem encountered by prior art battery testers by providing thermal insulating means between the conductive layer and the battery housing and providing a conductive layer that generates sufficient heat to effect a change in the color indicator layer.

For a better understanding of the present invention, reference will now be made, by way of example only, to the accompanying drawings in which:-
Figure 1 is an exploded view of a voltmeter assembly constructed according to the present invention;
Figure 2 is a schematic view of the voltmeter assembly shown in Figure 1;
Figure 3 is a schematic view of the voltmeter assembly shown in Figure 2 attached to a battery; and
Figures 4 and 5 show two embodiments of electrical membrane switches which are used to operate the voltmeter when it is attached to a battery.

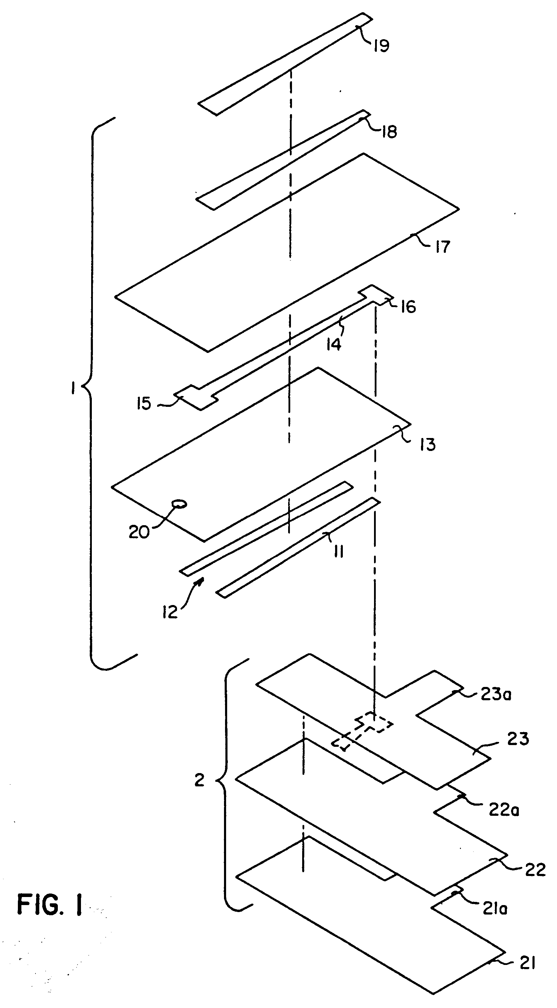

Figure 1 shows an exploded view of an embodiment of a voltmeter assembly constructed in accordance with the present invention. The voltmeter assembly comprises a voltmeter 1 and a mounting arrangement 2. The voltmeter 1 includes standoffs 11 for creating a temperature insulating air pocket 12 underneath dielectric layer 13. The standoffs 11 can be plastic strips, embossed or printed dielectric inks. The standoffs 11 can also be formed by embossing crimps into the dielectric layer 13.

Essential to this invention is the thermal insulating means (in this case, the air pocket 12) which is provided for conductive layer 14. This air pocket 12 insulates the conductive layer 14 from the battery can (not shown in Figure 1) when the voltmeter is combined with a battery, either alone or as part of a battery label.

Instead of an air pocket, the thermal Insulating means can be provided by inserting thermal insulating materials, such as paper, plastic or cloth under the dielectric layer 13. The dielectric layer 13 can be formed from any suitable electrically insulating material.

Above dielectric layer 13 is conductive layer 14 having terminal ends 15, 16. The conductive layer 14 can be self-supporting or it can be coated onto a support such as the dielectric layer 13 itself or another layer included in the voltmeter 1.

The conductive layer 14 is deposited on dielectric layer 13 by printing, coating, painting or other conventional techniques. This conductive material may be silver, nickel, iron, copper, carbon, lead, and so forth, and mixtures thereof and is preferably dispersed in some type of binder material to form a conductive ink. Silver is the preferred conductor; typical thicknesses are 0.00508 to 0.0254mm (0.0002 to 0.001inch). A suitable silver based conductive ink is Zymet SLP4070 (trade mark) made by Zymet, Inc., Hanover, New Jersey.

The conductive layer 14 is designed to have an increasing cross sectional area in a longitudinal direction from one end to the other, thus creating a gradient of heat generation along the length of the layer which is dependent on the voltage and current output and thus strength of the battery. The battery current which flows through the conductive layer 14 during testing is directly proportional to the voltage because the resistance of the conductive layer is fixed.

A resistance value in the range of 1 to 2.5 ohms works for standard 1.5V alkaline batteries. For this fixed resistance, the indicating scale can be calibrated to display the corresponding state of charge or service life remaining in the battery. The dimensions and resulting resistance of the conductive layer 14 can be adjusted for any battery voltage or current. It is clear from Ohm's law the voltmeter can be calibrated for volts, current, remaining service life or state of charge.

Above conductive layer 14 is label layer 17. Label layer 17 may comprise one or more layers depending upon the particular label design. In some embodiments, label layer 17 is not included since dielectric layer 13 may serve also as a label layer. This embodiment of the invention shows the voltmeter 1 optionally integrated into a battery label. In some embodiments where the voltmeter is included in a window of a label, the label layer 17 will be omitted from the voltmeter 1 as shown in Figure 1.

Residing on label layer 17, or optionally, directly on the conductive layer 14 is a calibrated graphic layer 18 for measuring voltage or current. The graphics layer 18 provides background and/or a calibrated scale for indicating changes in color indicator layer 19 according to the voltage or current status of a battery. It will be obvious to those skilled in the art that the graphics layer 18 can be omitted in those cases where the color change in the temperature sensitive color indicator layer 19 is visually observable.

Above or alongside the graphic layer 18 is temperature sensitive color indicator layer 19. The temperature sensitive color indicator layer 19 is color reversible in response to a temperature change, and thereby detects the changes in temperature of the voltmeter conductive layer 14.

Useful color reversible temperature sensitive materials are well known in this art. They include microencapsulated cholesteric liquid crystal and reversible thermochromic materials. Both types of materials can be modified to achieve the optimum color change in a desired temperature range. They can be coated by standard printing, coating or painting techniques. Coating thicknesses of 0.0254 to 0.0508mm (0.001 to 0.002inch) are useful. Examples of suitable materials are chiral nematic liquid crystals, and thermochromic ink and thermochromic tapes. The color indicator layer 19 changes from color to colorless; colorless to a color; or one color to a second color.

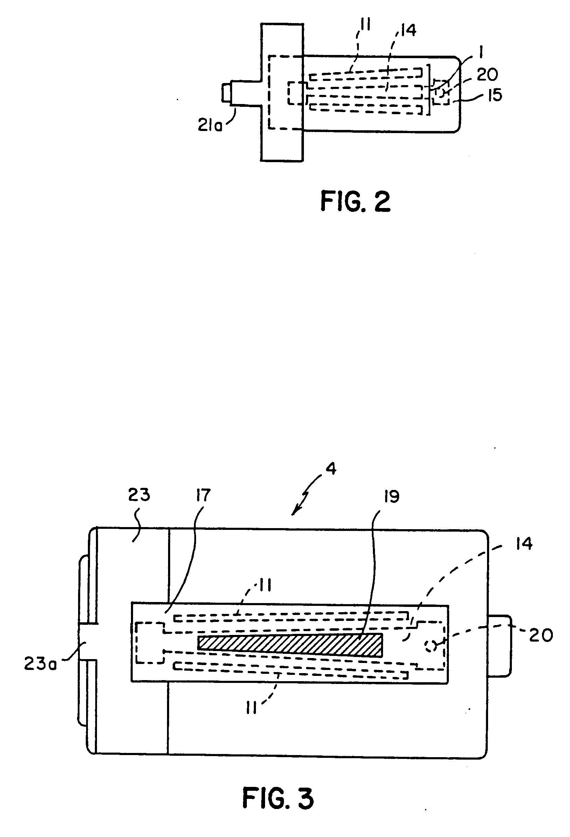

Mounting arrangement 2 is used to attach the voltmeter 1 to a battery 4 (as shown in Figure 3). Mounting arrangement 2 comprises an adhesive layer 21, an electrically insulating layer 22, an electrically conducting layer 23 and tabs 21a, 22a and 23a. The assembled voltmeter 1 (shown in Figure 1) is mounted on the arrangement 2 by resting the terminal end 16 of conductive layer 14 on conducting tab 23a. The completed assembly of the voltmeter 1 and its mounting arrangement 2 (as shown in Figure 2) is then adhered to the surface of a battery.

In Figure 2, the conductive layer 14 is shown by broken lines in contact with the electrically conductive layer 23 with the layer 23 extending to form the longest part of tab 23a. Figure 3 shows schematically the voltmeter 1 and its mounting arrangement 2 attached to a battery housing 4.

The current flow through the conductive layer which results in the above heat generation and color change is initiated by connecting the terminals of the battery to the terminals 15, 16 formed in the conductive layer 14. The connection is formed via a switch mechanism.

Electrical switching means for completing an electrical circuit between battery electrodes and the conductive layer 14 of the voltmeter 1 include, but are not limited to the following switching means embodiments:-
1) a reversible pressure sensitive membrane switch built into the battery label layers to contact the positive terminal of the battery (battery can). This switch is constructed by introducing a "hole" 20 in the dielectric layer 13 of the voltmeter 1 directly under one end 15 of the conductive layer 14, as described hereinafter in connection with the Figures. This isolates the conductive layer 14 from contact from the battery can 4. Activation of the voltmeter 1 occurs when pressure is applied on the flexible upper layer of the label layer above the end of conductive layer above the hole 20 in the dielectric layer 13.
   Pressure causes the conductive layer 14 to make electrical contact with the battery can 4 through the dielectric layer 13. Rigidity and springback in the label layer causes the connection to be broken when pressure is discontinued.
   Connection to the negative terminal of the battery, which completes the circuit, is fixed to the conductive layer 14 of the voltmeter 1 in a manner described herinafter in connection with the Figures, with a conductive foil adhesive strip that is electrically insulated from the battery can. This strip can be either a separate piece under the label or incorporated into the non-visible side of the label construction. A small tab of this foil strip is connected permanently to the negative terminal cap of the battery during the label application process to complete the connection.
2) an external "tab" switch which protrudes beyond the end of the battery past either one of the terminals. The tab switch is not permanently connected to one terminal of the battery. Instead, the tab is contacted with the terminal only when it is desired to activate the voltmeter. The other battery terminal is connected, permanently to the other end of the voltmeter conductive layer.
3) an external switch as described in 2) above, except that the tab is contacted to the negative battery terminal through an external conductor such as a coin, wire, and so forth.
4) the above described membrane switch mechanism can also be incorporated into both ends 15, 16 of the conductive layer 14 thus making a double membrane switch operation necessary for activation of the tester. This has the advantage of being less susceptible to accidental activation of the voltmeter during handling or battery storage in a device which could result in a draining of useful battery life. The negative terminal connection would remain as described above.

In all of the above switch variations the resulting battery voltage or capacity is read from the appropriate indicating scale while the switch is activated. Release of the switch causes the circuit to open and the temperature sensitive color indicator layer 19 to return to its prior state. This can be repeated until there is insufficient battery strength or capacity to cause a color change.

The above switch mechanisms can be achieved by adhering the voltmeter to a battery directly or by integrating the voltmeter into a label and then applying the label-voltmeter assembly directly to the can.

In one embodiment a membrane switch, referred to above, is formed by placing the conductive terminal end 15 in registration with the hole 20 in layer 13. The voltmeter 1 is then assembled with the layers in the order indicated above.

In the membrane switch embodiment under discussion the conductive layer of the tab 23a is adhered permanently to the bottom negative electrode of the battery.

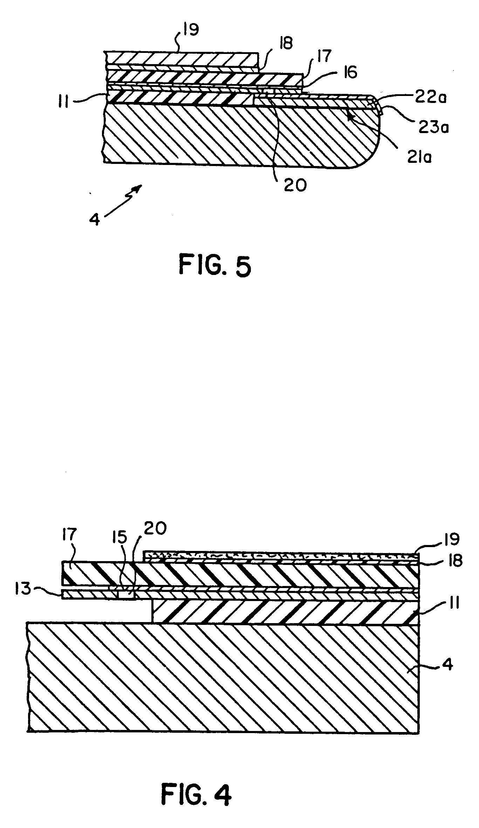

The operation of the membrane switch is explained by reference to Figures 1 and 4. The numbering of elements in Figure 1 is carried over into Figure 4 for similar elements. The hole 20 in layer 13 in Figures 1 and 4 is in registration with one of the terminal ends 15 of the conductive layer 14.

In Figure 4, the conductive layer terminal end 15 is shown in registration with the hole 20 in layer 13 on stand-offs 11. When pressure is applied to the label layer 17 directly above hole 20 the conductive layer terminal 15 is brought into contact with the electrically conductive surface of the battery 4. Since the tab 23a of 2 of Figure 1 is already in electrical contact with the negative terminal of the battery, the electrical circuit is closed, electrical current from the battery flows through conductive layer 14 creating heat that causes a change in the color indicator layer 19.

In another switch embodiment, as shown in Figure 5, two separate membrane switches are used. In this embodiment, both switches must be engaged at the same time to form a complete electrical circuit between the conductive layer of the voltmeter and and the battery. Both terminal ends 15 and 16 of conductive layer 14 in voltmeter 1 in Figure 1 are each in registration with separate holes 20 formed in the dielectric layer 13. Neither terminal end 15 or 16 is in permanent electrical contact with the battery. The terminal 16 in registration with a second hole 20 in the layer 13. This second hole is directly above the electrically conductive layer 23 the mounting arrangement 2 shown in Figure 1. Tab 23a is in permanent electrical contact with the negative electrode of the battery. Pressure is applied to the label layer 17 directly above hole 20 to bring the conductive terminal end 16 into electrical contact conductive layer 23. With both conductive layer terminals 15, 16 in contact with the positive and negative terminals of the battery the voltmeter 1 is activated.

The label of this invention comprising a voltmeter is composed of a one or more layers usually bearing graphic information about the battery. Such layers can include a standard heat shrinkable label material and may be of single- or multiple-layer design.

For the single-layer label, the desired graphics are printed on a designated side of the material using standard lithographic, flexographic, gravure or screen processes and ink materials. An additional final coating such as varnish may be applied for protection of the printed graphics.

In the multiple-layer label, the desired graphics are printed on the label using the aforementioned techniques after which the substrate is laminated to another layer of the same or different material to form the multiple-layer effect. Many of the multiple-layer designs also include a metallized foil layer for graphics enhancement. An example of such a design would be PVC Triplex ZE (trade mark) from Zweckform GmbH, Holzkirchen, FRG.

Both the single layer and multiple layer designs can be employed on the battery by the pressure sensitive or tube technique. In the pressure sensitive technique, an adhesive coating is added to the reverse of the label which adheres and aligns the label to the battery until the final shrink fit at elevated temperature is completed. For the tube technique, the ends of the label are sealed to itself to create an open ended "tube" which is placed over the battery in position for the final position for the final shrink fit. Labeling methods for batteries are well known in the art.

## Claims

1. A battery having a label attached thereto, the battery comprising a housing (4) which acts a heat-sink,
characterized in that the label includes, as an integral part thereof, a voltmeter (1) comprising:
a dielectric layer (13);
a conductive layer (14, 15, 16) adjacent one of the surfaces of the dielectric layer (13); and
a temperature sensitive color indicator layer (19) in thermal contact with the conductive layer (14, 15, 16), the conductive layer (14, 15, 16) having sufficient heat generating capacity to effect a change in the temperature sensitive color indicator layer (19);
and in that the voltmeter further comprises thermal insulating means (11, 12) on the other surface of the dielectric layer (13) for thermally insulating the conductive layer (14, 15, 16) and the dielectric layer (13) from the housing of the battery (4) to which the label is attached, and one or two apertures (20) in the dielectric layer (13) for forming an electrical switch cooperating with an electrically conductive surface of the battery housing (4), one or both ends (15, 16) of the conductive layer (14) being in registration with a corresponding aperture (20) thereby forming said switch.

2. A battery having a label attached thereto according to claim 1, further comprising a graphics layer (18) for measuring color change, said layer (18) being proximate to the temperature sensitive color indicator layer (19).

3. A battery having a label attached thereto according to claim 2, wherein the graphics layer (18) includes a scale calibrated to indicate battery voltage, current, or battery useful life according to changes in color in the indicator layer (19) .

4. A battery having a label attached thereto according to any one of claims 1 to 3, wherein the thermal insulating means (11, 12) forms an air pocket (12).

5. A battery having a label attached thereto according to claim 4, wherein the thermal insulating means (11, 12) comprise standoffs (11) located on the dielectric layer surface most distant from the conductive layer (14, 15, 16).

6. A battery having a label attached thereto according to any one of the preceding claims, wherein the color indicator layer (19) is selected from thermochromic inks, liquid crystalline materials and thermochromic tapes.

7. A battery having a label attached thereto according to any one of the preceding claims, wherein the conductive layer (14, 15, 16) is formed from conductive inks, conductive polymers, metal foil or metal wire.

8. A battery having a label attached thereto according to claim 7, wherein the conductive inks comprise silver, copper, carbon or mixtures thereof.

9. A battery having a label attached thereto according to any one of the preceding claims, wherein the color indicator layer (19) changes from:
a) a color to colorless;
b) colorless to a color; or
c) one color to a second color.

10. A battery having a label attached thereto according to any one of the preceding claims, wherein one or more layers are included for labelling purposes between the conductive layer (14, 15, 16) and the color indicator layer (19).

11. A battery having a label attached thereto according to claim 10, wherein one or both ends (15, 16) of the conductive layer (14) extends beyond one or both edges of the label respectively.

## Patentansprüche

1. Batterie mit einem wärmeabführenden Gehäuse (4) und einem daran angebrachten Etikett, dadurch gekennzeichnet, daß in das Etikett ein Spannungsindikator (1) integriert ist, der folgende Komponenten aufweist:
- eine dielektrische Schicht (13);
- eine auf einer der Flächen der dielektrischen Schicht (13) aufliegende leitfähige Schicht (14, 15, 16); und
- eine temperaturempfindliche Farbindikatorschicht (19) in Wärmekontakt mit der leitfähigen Schicht (14, 15, 16), deren Wärmeleistung ausreicht,um in der temperaturempfindlichen Farbindikatorschicht (19) eine Veränderung zu bewirken;
und daß der Spannungsindikator zusätzlich folgende Komponenten umfaßt:
- auf der anderen Fläche der dielektrischen Schicht (13) angeordnete Wärmeisoliermittel (11, 12), um zwischen dem das Etikett tragenden Batteriegehäuse (4) und der leitfähigen Schicht (14, 15, 16) sowie der dielektrischen Schicht (13) eine Wärmedämmung zu bewirken, und
- eine oder zwei in der dielektrischen Schicht (13) angeordnete Öffnungen (20), die einen mit einer elektrisch leitfähigen Fläche des Batteriegehäuses (4) zusammenwirkenden elektrischen Schalter bilden, wobei ein oder beide Endabschnitt(e) (15, 16) der leitfähigen Schicht (14) einer solchen Öffnung (20) zugeordnet sind und dadurch den Schalter bilden.

2. Batterie nach Anspruch 1, gekennzeichnet durch eine Skalenschicht (18) zum Ablesen der Farbveränderung, wobei die Schicht (18) unmittelbar an die temperaturempfindliche Farbinduktorschicht (19) angrenzt.

3. Batterie nach Anspruch 2, dadurch gekennzeichnet, daß die Skalenschicht (18) eine zur Anzeige von Batteriespannung, -strom oder -kapazität geeignete und entsprechend den Farbveränderungen der Indikatorschicht (19) kalibrierte Skalenteilung aufweist.

4. Batterie nach einem der Ansprüche 1 - 3, dadurch gekennzeichnet, daß die Wärmeisoliermittel (11, 12) eine Lufttasche (12) bilden.

5. Batterie nach Anspruch 4, dadurch gekennzeichnet, daß die Wärmeisoliermittel (11, 12) auf der von der leitfähigen Schicht (14, 15, 16) abgewandten Fläche der dielektrischen Schicht angeordnete Abstandhalter (11) aufweisen.

6. Batterie nach einem der vorhergehenden Ansprüche, dadurch gekennzeichnet, daß die Farbindikatorschicht (19) aus thermochromen Farbstoffen, Flüssigkristall-Materialien oder thermochromem Bandmaterial bestehen.

7. Batterie nach einem der vorhergehenden Ansprüche, dadurch gekennzeichnet, daß die leitfähige Schicht (14, 15, 16) aus leitfähigen Farbstoffen, leitfähigen Polymeren, Metallfolie oder Metalldraht besteht.

8. Batterie nach Anspruch 7, dadurch gekennzeichnet, daß die leitfähigen Farbstoffe Silber, Kupfer, Kohlenstoff oder deren Mischungen enthalten.

9. Batterie nach einem der vorhergehenden Ansprüche, dadurch gekennzeichnet, daß sich die Farbindikatorschicht (19) von
a) farbig zu farblos,
b) farblos zu farbig, oder
c) farbig zu andersfarbig verändert.

10. Batterie nach einem der vorhergehenden Ansprüche, dadurch gekennzeichnet, daß sich zwischen der leitfähigen Schicht (14, 15, 16) und der Farbindikatorschicht (19) eine oder mehrere Etikettierungsschichten befinden.

11. Batterie nach Anspruch 10, dadurch gekennzeichnet, daß sich ein oder beide Endabschnitt(e) (15, 16) der leitfähigen Schicht (14) über einen Rand bzw. beide Ränder des Etiketts hinauserstreckt (-erstrecken).

## Revendications

1. Pile à laquelle est fixée une étiquette, la pile comprenant un boîtier (4) qui joue le rôle d'un puits de chaleur,
caractérisée en ce que l'étiquette comprenant, en tant que partie intégrante de celle-ci,un voltmètre (1) comprenant :
une couche diélectrique (13),
une couche conductrice (14, 15, 16) voisine d'une des surfaces de la couche diélectrique (13), et
une couche indicatrice de couleur (19) sensible à la température en contact thermique avec la couche conductrice (14, 15, 16), la couche conductrice (14, 15, 16) ayant une capacité de production de chaleur suffisante pour provoquer une changement de la couche indicatrice de couleur (19) sensible à la chaleur,
et en ce que le voltmètre comprend par ailleurs des moyens thermo-isolants (11, 12) sur l'autre surface de la couche diélectrique (13) pour isoler thermiquement la couche conductrice (14, 15, 16) et la couche diélectrique (13) du boîtier de la pile (4) à laquelle l'étiquette est fixée, et une ou deux ouvertures (20) dans la couche diélectrique (13) pour former un commutateur électrique coopérant avec une surface conductrice électriquement du boîtier (4) de la pile, une ou les deux extrémités (15, 16) de la couche conductrice (14) étant en concordance avec une ouverture correspondante (20), pour ainsi former ledit commutateur.

2. Pile à laquelle est fixée une étiquette selon la revendication 1, comprenant par ailleurs une couche graphique (18) pour mesurer le changement de couleur, ladite couche (18) étant proche de la couche indicatrice de couleur (19) sensible à la température.

3. Pile à laquelle est fixée une étiquette selon la revendication 2, dans laquelle la couche graphique (18) comprend une échelle étalonnée pour indiquer la tension de la pile, le courant ou la durée de vie utile de la pile en fonction des changements de couleur de la couche indicatrice (19).

4. Pile à laquelle est fixée une étiquette selon l'une quelconque des revendications 1 à 3, dans laquelle les moyens thermo-isolants (11, 12) forment une poche d'air (12).

5. Pile à laquelle est fixée une étiquette selon la revendication 4, dans laquelle les moyens thermo-isolants (11, 12) comprennent des séparateurs (11) disposés sur la surface de la couche diélectrique la plus éloignée de la couche conductrice (14, 15, 16).

6. Pile à laquelle est fixée une étiquette selon l'une quelconque des revendications précédentes, dans laquelle la couche indicatrice de couleur (19) est choisie parmi les encres thermochromiques, les matières cristallines liquides et les rubans thermochromiques.

7. Pile à laquelle est fixée une étiquette selon l'une quelconque des revendications précédentes, dans laquelle la couche conductrice (14, 15, 16) est formée d'encres conductrices, de polymères conducteurs, de film métallique ou de fil métallique.

8. Pile à laquelle est fixée une étiquette selon la revendication 7, dans laquelle les encres conductrices comprennent de l'argent, du cuivre, du carbone ou des mélanges de ceux-ci.

9. Pile à laquelle est fixée une étiquette selon l'une quelconque des revendications précédentes, dans laquelle la couche indicatrice de couleur (19) passe
a) d'une couleur à une absence de couleur,
b) d'une absence de couleur à une couleur, ou
c) d'une couleur à une deuxième couleur.

10. Pile à laquelle est fixée une étiquette selon l'une quelconque des revendications précédentes, dans laquelle on inclut une ou plusieurs couches à des fins d'étiquetage entre la couche conductrice (14, 15, 16) et la couche indicatrice de couleur (19).

11. Pile à laquelle est fixée une étiquette selon la revendication 10, dans laquelle une ou les deux extrémités (15, 16) de la couche conductrice (14) s'étend(ent) au-delà d'un ou des deux bords de l'étiquette, respectivement.
